# EUROPEAN PATENT SPECIFICATION

(11) **EP 0 305 478 B1**
(45) Date of publication and mention of the grant of the patent: **28.07.1993**
(21) Application number: 88902715.7
(22) Date of filing: 24.02.1988
(51) Int. Cl.: B41M 5/00, G01D 15/34, B32B 23/08, D06N 7/04

(54) **RECORDING TRANSPARENCY AND METHOD FOR ITS PRODUCTION**
TRANSPARENTES AUFZEICHNUNGSMATERIAL UND METHODE ZU DESSEN HERSTELLUNG
SUPPORT TRANSPARENT D'INFORMATIONS ET PROCEDE DE PRODUCTION

(30) Priority: 24.02.1987 US 17784
(43) Date of publication of application: 08.03.1989
(73) Proprietor: XAAR LIMITED, Cambridge CB4 4FD (GB)
(72) Inventor: KRUSE, Jurgen, M., Clinton, CT 06413 (US)
(74) Representative: Cropp, John Anthony David
(86) International application number: US8800589
(87) International publication number: WO8806532

(56) References cited:
- DE-A- 3 510 565
- US-A- 4 555 437
- US-A- 4 642 247
- US-A- 4 686 118
- US-A- 4 775 594
- PATENT ABSTRACTS OF JAPAN, vol. 10, no. 167 (M-488)[2223], 13th June 1986;& JP-A-61 19 389 (MITSUBISHI SEISHI K.K.) 28-01-1986
- PATENT ABSTRACTS OF JAPAN, vol. 10, no. 249 (M-511)[2305], 27th August 1986;& JP-A-61 78 687 (FUJIMORI KOGYO K.K.) 22-04-1986

## Description

### BACKGROUND OF THE INVENTION

### Field of the Invention

This invention relates generally to recording or printing media and, more particularly, this invention relates to a recording transparency useful in connection with ink jet and other recording processes.

### Description of Related Art

The use of recording transparencies in connection with, for example, overhead projection systems is well known. Typical recording transparencies comprise a flexible substantially transparent film usually of a hydrophobic polymeric material such as polyester, with a surface coating which accepts various indicia, such as inks from ink jet printers or pens and the like.

It is desirable that the surface coating be substantially clear and capable of providing high density images which are permanent and smear resistant. It is also important that images imparted to the coating dry quickly. The latter characteristic is generally a function of the rate of ink sorption, while smear resistance is principally determined by the hydrolytic stability of the coating.

While some prior coatings used in recording transparencies have provided acceptable ink drying times and/or smear resistance for various specific types of inks, it is desirable for a recording transparency to accept any of a wide range of indicia, including indicia from ink jet printers, solvent base inks such as used in marker pens, and xerographic toners. Such transparencies would be highly versatile in a commercial setting, allowing users to utilize more than one type of printer, marker or copier to produce a given transparency. Heretofore, recording transparencies having the versatility to accept different types of inks and/or toners while providing fast drying times and smear resistance have not been known.

Also, because of the hydrophobic nature of the film surface, the coating of the film with the ink receptive layer is usually done from a solvent. It is a major departure from the art that the coating of clear film in this invention is done from aqueous solution or suspension. Coating from water is not only safer but also avoids environmental problems with the storage and recovery or disposal of the solvents.

US-A-4642247 describes a recording medium for recording with aqueous ink, e.g. by ink jet recording, comprising a substrate carrying an ink-receiving layer which includes hydroxyethyl cellulose; however, the hydroxyethyl cellulose is employed as an underlayer which underlies a water-resistant upper layer of acrylic resin.

US-A-4555437 describes a transparent recording medium comprising a base coated with hydroxyethyl cellulose but does not propose the use of a mixture of polymers having different molecular weights.

According to the present invention, there is provided a method of forming a recording transparency by applying a clear hydrophilic coating to a hydrophilic surface of a substantially transparent substrate by coating said surface with an aqueous solution of hydroxyethylcellulose polymer followed by evaporation of the water in said solution characterised in that said solution comprises a mixture of hydroxyethyl cellulose polymer of relatively low molecular weight and hydroxyethyl cellulose polymer of relatively high molecular weight, said polymer of relatively low molecular weight having an average molecular weight such that a 5 wt percent aqueous solution thereof has a viscosity in the range of 0.075 to 0.15 Pa.s (75 to 150 cps) at 25°C and said polymer of relatively high molecular weight having an average molecular weight such that a 2 wt percent aqueous reference solution thereof has a viscosity in the range of 4.8 to 5.6 Pa.s (4800 to 5600 cps) at 25°C.

The invention also provides a recording transparency comprising a substantially transparent substrate having a hydrophilic surface coated with hydroxyethyl cellulose polymer comprising the above mentioned mixture of relatively low molecular weight polymer and relatively high molecular weight polymer.

According to the present invention, a recording transparency comprising a substantially transparent substrate having a hydrophilic surface bearing a substantially transparent coating is provided. The coating is applied to the hydrophilic surface of the substrate by application of an aqueous coating solution, followed by evaporation of the water in the solution.

The coating solution comprises an aqueous solution of a mixture of hydroxyethyl cellulose polymers in a sufficiently high concentration to provide a desirably high rate of indicia sorption and drying, while having a sufficiently high viscosity to be readily coatable on the substrate surface. The coating solution optionally may contain a surfactant to promote leveling and adhesion to the surface, as well as hydrated alumina in order to impart pencil tooth to the surface if desired.

### DETAILED DESCRIPTION OF THE INVENTION

According to the present invention, a Substantially clear transparency coating having the attributes of fast drying time (i.e. rapid sorption of inks or other indicia applied to the coating) as well as excellent hydrolytic stability (providing smear resistance) and which is readily receptive to a wide variety of indicia (including water and solvent based inks, ink jet inks, dry xerographic toners, pencil indicia, etc.) is provided for the first time. These properties result from the formation of a transparency coating by the application and drying of an aqueous coating solution of a particular mixture of hydroxyethyl cellulose polymers. The polymer is present in a concentration and has an average molecular weight and molecular weight distribution such that there is sufficient relatively low molecular weight polymer to provide good ink sorption rate characteristics, with sufficient relatively high molecular weight polymer to impart a solution viscosity which allows ready coating of the substrate.

Thus, it has been found that coating characteristics balancing a desirably high rate of ink sorption with the desirably high hydrolytic stability provided by higher molecular weight materials can be provided using the specified mixture of hydroxyethyl cellulose polymers.

More specifically, it has been found that an aqueous solution containing said mixture of hydroxyethyl cellulose polymers in a total concentration range of about 0.25 to about 7 wt. percent, inclusive, with a distribution of polymer molecular weight to provide a solution viscosity of between about 0.1 Pa.s (100 cps) and about 4 Pa.s (4000 cps), inclusive (as measured at 25°C), will provide a transparency coating having all of the desirable properties set forth above.

Preferably, the coating solution has a concentration of polymer within the range of about 2 to 6 wt. percent, inclusive, and the solution viscosity is in the range of about 0.2 Pas (200 cps) to about 2 Pa.s (2000 cps), inclusive. The solution viscosity is highly preferably in the range of about 1 Pa.s (1000 cps) to 2 Pa.s (2000 cps), inclusive. (Reference herein to solution viscosity is understood to mean LVF Brookfield viscosity as measured at 25°C.)

The substantially transparent substrate will generally be of a polymeric material, which typically will be hydrophobic. It is necessary only that the surface to be coated be hydrophilic, and techniques for treating hydrophobic materials to render their surfaces hydrophilic are well known in the art.

A preferred transparency substrate material is a polyester film marketed by Imperial Chemical Industries (ICI) under the trademark MELINEX, Type 519 or 582. This polyester film is hydrophobic, but is pretreated to render its surfaces hydrophilic. Another transparency substrate material which is believed to be useful is market by Hoechst under the trademark HOSTAPHAN 4660.

Hydroxyethyl cellulose (HEC) polymers are commercially available. Those which are currently preferred are marketed by Union Carbide Corporation under the trademark CELLOSIZE. CELLOSIZE hydroxyethyl cellulose is available in a wide range of viscosity grades which are believed to differ primarily in average molecular weight and molecular weight distribution.

Although the actual average molecular weight and molecular weight distributions of the Union Carbide CELLOSIZE HEC products are not believed to be publicly available, viscosity data for these materials, which are directly correlatable to molecular weight, are available.

According to the invention, it has been found that the use in a coating solution of relatively high molecular weight hydroxyethyl cellulose polymers provides good water resistivity and stability to transparency coatings. However, the use of only high molecular weight materials tends to provide very viscous solutions and, because of relatively low water solubilities of HEC polymers provides coatings which have a poor capacity for ink jet inks, for example.

Conversely, the use of low molecular weight HEC polymers provides a solution having a viscosity which allows ready coating, but which is relatively sensitive to relative humidity and water, thus providing poor smear resistance.

Thus, it has been found that the use in aqueous solution of a mixture of relatively low and high molecular weight materials provides an excellent balance between sorption capacity and drying rate on the one hand and hydrolytic stability on the other. It is believed that the ability to provide quick drying times with excellent image formation is a result of having a sufficiently high number of low molecular weight molecules in the coating, while hydrolytic stability results from the presence of a sufficiently high number of high molecular weight molecules in the coating.

It has been further found that these desirable properties are correlatable with the polymer concentration and the viscosity of the coating solution.

Thus, according to the invention, an aqueous solution comprising a sorbent consisting essentially of hydroxyethyl cellulose polymers having a total polymer concentration in the range of about 0.25 to about 7 wt. percent, inclusive, as well as a solution viscosity of between about 0.1 Pa.s (100 cps) and 4 Pa.s (4000 cps), inclusive, will provide good results.

Preferably, the polymer concentration is in the range of about 2 to 6 wt. percent, inclusive, highly preferably in the range of about 3 to 4 wt. percent, and the viscosity is in the range of about 0.2 Pa.s (200 cps) to about 2 Pa.s (2000 cps), highly preferably in the range of about 1 Pa.s (1000 cps) to 2 Pa.s (2000 cps), inclusive. Conveniently, the solution may comprise a mixture of hydroxyethyl cellulose polymers dissolved in water.

A convenient low molecular weight polymer for use in the mixture is CELLOSIZE QP09H or QP09L. Grade QP09L has a viscosity range of 0.075 to 0.112 Pa.s (75-112 cps) (5 wt. percent aqueous solution, spindle number 1, 30 rpm) and grade QP09H has a viscosity range at 25°C of 0 113 to 0.150 Pa.s (113-150 cps) (5 wt. percent aqueous solution, spindle number 1, 30 rpm).

Such low molecular weight polymer is used in admixture with at least one relatively high molecular weight HEC, such as the preferred QP4400 or a mixture thereof with the intermediate molecular weight QP300. QP4400 HEC has a Brookfield viscosity at 25°C of 4.8 Pa.s (4800 cps) to 5.6 Pa.s (5600 cps) (2 wt. percent aqueous solution, spindle number 4, 60 rpm) while QP300 HEC has a viscosity range of 0.25-0.4 Pa.s (250-400 cps) at 25°C (2 wt. percent aqueous solution, spindle number 2, 60 rpm).

Aqueous solutions of QP09 with QP4400 or with a mixture of QP4400 and QP300 give clear transparency coatings with sufficient ink sorption capacity for the Hewlett Packard (HP), Siemens, and Canon ink jet printers. Drying times for the HP unit (the slowest drying of these units) are on the order of 8-25 seconds to a nonsmudging state using a solution containing 6 wt. percent QP09H, and 1 wt. percent of a mixture of QP4400 and QP300. This type of coating is also receptive to a glycol based ink in pens which will dry smudge free in less than one second, or a water based ink in pens which will dry to a smudge free state in less than 5 seconds.

The solution preferably should contain no more than about 1.5 wt. percent, preferably 0.3 to 1.5 wt. percent, of the relatively high molecular weight HEC polymer, and this solution should contain no more than 7 wt. percent of all HEC polymers.

If desired, an antifoam agent such as Antifoam T (Andrews) or Nopco's Foam Master DF160L may be used. Although not generally necessary, these materials do not adversely affect performance. Typical usage rates of antifoam materials are about 0.01 wt. percent.

In many cases it will be desirable to utilize a surfactant to promote adhesion of the transparency coating to the substrate. A preferred surfactant is marketed by International Products Corporation under the trademark MICRO. This is a mixed anionic and nonionic surfactant, and it has been found to both promote adhesion and to eliminate occasional surface defects, and does not retard the rate of ink drying. A surfactant concentration range of about 0.05 to 0.2 percent should be used. At higher concentrations, the solution becomes foamy, and below the lower end of the range the effects of the surfactant are insufficient for practical purposes.

In practice, when the transparency is produced by rod coating, a relatively dilute solution and larger rod sizes are preferred. For example, a solution having a 6 wt. percent QP09 concentration is too viscous for rod coating. Also, since QP300 HEC contributes to viscosity with only a marginal benefit to drying rate, it may be eliminated if desired.

Although relatively dilute solutions coated in thicker layers should give very similar results to relatively viscous solutions coated in thin layers, in practice relatively viscous solutions apply more material so that for rod coating a viscosity range of up to 0.4 Pa.s (400 poise) is desirable, with an optimum near 0.3 or 0.4 Pa.s (300 or 400 cps).

The hydrophilic coatings made according to the invention sorb ink from HP, Canon and Siemens ink jet systems with excellent retention of dot shape and size. Also, these coatings sorb ink from glycol based marker pens and water based ink pens, and provide excellent images with xerographic dry toners, including those used in laser printing. They serve extremely well for projection films.

If it is desired to allow the use of pencils on the transparency, a gritty coating which provides good pencil tooth may be obtained by the inclusion in the coating solution of hydrated alumina, preferably with very minor amounts of coated silica. A preferred alumina is marketed by Degussa under the trademark ALUMINA-C, a high surface area (e.g. 100 m²/g) fumed alumina having low average particle size (about 200 nm) so that scattering of light is minimized and the coatings remain relatively clear. Any silica used in the coating should be very fine grained and wax coated in order to minimize scattering. A preferred silica is SCM's Silcron G-530. The coating preparation should be carried out in order to provide as uniform a dispersion of the alumina and silica as possible. To this end, the alumina and silica may be predispersed in water and added to the bulk of the coating solution.

The following table provides examples of various formulations, solution viscosity and ink drying times using the Hewlett Packard ink jet printer:

**TABLE**

| Sample | QP 09 % | QP 4400 % | QP 300 % | Micro % | Coating Solution Viscosity Pa.s.(cps) | HP Ink Drying Time (Sec) |
|---|---|---|---|---|---|---|
| 1 | 6* | 1.5 | 1.0 | 0.1 | 3.8 (3800) | 9 |
| 2 | 6 | 1.5 | 1.0 | 0.1 | 3.1 (3100) | 12 |
| 3 | 6 | 1.5 | --- | 0.1 | 1.5 (1500) | 13 |
| 4 | 4 | 1 | --- | 0.1 | 0.38 (380) | 13 |
| 5 | 4* | 1 | --- | 0.1 | 0.42 (420) | 14 |
| 6 | 3.3* | 1 | 1 | 0.1 | 0.7 (700) | 12 |
| 7 | 3.3 | 1 | --- | 0.1 | 0.24 (240) | 17 |
| 8 | 4 | 0.8 | --- | 0.1 | 0.22 (220) | 16 |

| | | | | | | |
|---|---|---|---|---|---|---|
| *denotes QP09H; other samples used QP09L | | | | | | |

The following is an exemplary procedure to further illustrate the practice of the invention. HEC polymer and Micro surfactant were added to 100 g water and dissolved by stirring. To this solution was added a slurry of Alumina-C hydrated alumina and Silcron G-530 coated silica in 10 to 30 ml water. The resultant slurry was stirred for several hours and then rod coated on a polyester film (Melinex 519) using a size 40 - 55 rod.

Materials tested and found satisfactory, in the sense of giving, after drying, a coating which is clear in appearance, acceptable drying times with HP and Canon ink jet printers, accepting both water-based and glycol-based ink pens, ball point pens, pencil, plastic pencil and normal ball point ink, and in that pencil lines could be erased and re-drawn in the erased areas, included QP 09H HEC at 0.25 - 7% mixed with 0.3 to 0.75% QP 4400 HEC (total HEC concentration no more than 7%); Micro surfactant concentrations of 0.05 to 0.2%; Alumina-C alumina levels of 0.75 to 2%; and Silcron G-530 coated silica levels of 0.1 to 0.3%.

The fastest drying of HP Thinkjet ink was observed with 2.5% QP 09H HEC and 0.7% QP 4400 HEC and a fine grained silica. However, the sample was very hazy and opaque. Using 2.5% QP 09H HEC, 0.75% QP 4400 HEC, 1.0% Alumina-C alumina and 0.2% Silcron G-530 silica, drying times of about 4 sec could be obtained.

Preferably, the coating solution contains dimethylolurea (DMU) as a cross-linking agent, in a concentration of about 0.05 wt.% to about 0.4 wt.%, based on the weight of hydroxyethyl cellulose polymer. The optimum concentration is about 0.2 wt.%. Concentrations less than 0.05 wt.% have little effect, and concentrations greater than 0.4 wt.% affect ink sorption.

The use of DMU as set forth above results in crosslinking of the HEC polymers to harden the surface to eliminate blocking problems. Also, the surface is rendered less sensitive to changes in ambient relative humidity.

Melinex, Hostaphan, Cellosize, Micro, Alumina-C, Antifoam-T, and Thinkjet are trade names which may be registered in one or more of the territories designated by this application.

## Claims

1. A method of forming a recording transparency by applying a clear hydrophilic coating to a hydrophilic surface of a substantially transparent substrate-by coating said surface with an aqueous solution of hydroxyethylcellulose polymer followed by evaporation of the water in said solution characterised in that said solution comprises a mixture of hydroxyethyl cellulose polymer of relatively low molecular weight and hydroxyethyl cellulose polymer of relatively high molecular weight, said polymer of relatively low molecular weight having an average molecular weight such that a 5 wt percent aqueous reference solution thereof has a viscosity in the range of 0.075 to 0.15 Pa.s (75 to 150 cps) at 25°C and said polymer of relatively high molecular weight having an average molecular weight such that a 2 wt percent aqueous reference solution thereof has a viscosity in the range of 4.8 to 5.6 Pa.s (4800 to 5600 cps) at 25°C.

2. A method as claimed in claim 1 characterised in that the solution further includes dimethylolurea and the coating is treated to effect cross-linking between hydroxethyl cellulose polymer and dimethylolurea.

3. A method as claimed in claim 2 in which the dimethylolurea is present in an amount of from 0.05 wt. percent to 0.4 wt. percent based on the total weight of hydroxyethyl cellulose polymer.

4. A method as claimed in any one of claims 1 to 3 characterised in that the concentration of said polymer in said coating solution is within the range of 0.25 to 7 wt. percent, inclusive, and the viscosity of said solution is between 0.1 and 4.0 Pa.s (100 and 4000 cps), inclusive, as measured at 25°C.

5. A method as claimed in claim 4 characterised in that said concentration is in the range of 2 to 6 wt. percent, inclusive, and said viscosity is in the range of 0.2 to 2.0 Pa.s (200 to 2000 cps), inclusive.

6. A method as claimed in any one of claims 1 to 5 wherein said solution further contains a hydroxyethyl cellulose polymer having an average molecular weight such that a 2 wt. percent aqueous reference solution thereof has a viscosity in the range of 0.25 to 0.4 Pa.s (250 to 400 cps) at 25°C.

7. A method as claimed in any one of claims 1 to 6 characterised in that the concentration in said coating solution of said relatively low molecular weight polymer is at least 0.25 wt. percent, the concentration of said relatively high molecular weight polymer is no more than 1.5 wt. percent, and the concentration of said further polymer is in the range of 0 to 1 wt. percent, inclusive, provided however that the total concentration of said polymers is in the range of 0.25 to 7 wt. percent, inclusive.

8. The method of claim 7 characterised in that the concentration of said relatively low molecular weight polymer is in the range of 2 to 6 wt. percent, inclusive.

9. The method of claim 8 characterised in that the concentration of said relatively low molecular weight polymer is 3 to 4 wt. percent, inclusive.

10. The method of claim 7, claim 8 or claim 9 characterised in that the concentration of said relatively high molecular weight polymer is 0.3 to 1.5 wt. percent, inclusive.

11. The method of any one of claims 1 to 10 characterised in that said coating solution further contains a surfactant effective in promoting adhesion of said coating to said surface.

12. The method of claim 11 characterised in that said surfactant is a mixture of anionic and nonionic surfactants and is present in said coating solution in a concentration in the range of 0.05 to 2 wt. percent inclusive.

13. The method of any one of claims 1 to 12 characterised in that said coating solution further contains hydrated alumina particles to impart pencil tooth to said coating.

14. The method of claim 13 characterised in that said alumina is present in said coating solution at a concentration of 0.75 to 2 wt. percent, inclusive.

15. The method of any one of claims 1 to 14 characterised in that said coating solution further contains wax-coated silica.

16. The method of claim 15 characterised in that said wax-coated silica is present in a concentration of 0.1 to 0.3 wt. percent, inclusive.

17. The method of any one of claims 1 to 16 characterised in that said substrate comprises a hydrophobic resinous film having a surface which is treated to make it hydrophilic.

18. The method of claim 17 characterised in that said film comprises a polyester resin.

19. For use in the coating of a hydrophilic surface of a substantially transparent substrate to produce a recording transparency, a coating solution as specified in any one of claims 1 to 18.

20. A recording transparency comprising a substantially transparent substrate having a hydrophilic surface coated with hydroxyethyl cellulose polymer characterised in that said polymer comprises a mixture of polymer of relatively low molecular weight and polymer of relatively high molecular weight, said polymer of relatively low molecular weight having an average molecular weight such that a 5 wt. percent aqueous reference solution thereof has a viscosity in the range of 0.075 to 0.15 Pa.s (75 to 150 cps) at 25°C, and said polymer of relatively high molecular weight having an average molecular weight such that a 2 wt percent aqueous reference solution thereof has a viscosity in the range of 4.8 to 5.6 Pa.s (4800 to 5600 cps) at 25°C

21. A recording transparency as claimed in claim 20 characterised in that hydroxyethyl cellulose polymer in the coating is cross-linked with dimethylolurea.

22. A recording transparency as claimed in claim 21 in which the dimethylolurea is present in an amount of from 0.05 wt percent to 0.4 wt percent based on the weight of hydroxyethyl cellulose polymer.

23. A recording transparency as claimed in claim 20, claim 21 or claim 22 characterised in that said mixture further includes a hydroxyethyl cellulose polymer having an average molecular weight such that a 2 wt. percent aqueous reference solution thereof has a viscosity in the range of 0.25 to 0.4 Pa.s (250 to 400 cps) at 25°C.

24. A recording transparency as claimed in any one of claims 20 to 23, characterised in that the coating further contains a surfactant effective in promoting adhesion of the coating to said surface.

25. A recording transparency as claimed in claim 24 characterised in that said surfactant is a mixture of anionic and nonionic surfactants.

26. A recording transparency as claimed in any one of claims 20 to 25 characterised in that the coating further contains one or both of hydrated alumina particles and wax coated silica.

27. A recording transparency as claimed in any one of claims 20 to 26 characterised in that the substrate comprises a hydrophilic resinous film the surface of which has been treated to make it hydrophilic.

28. A recording transparency as claimed in claim 27 characterised in that said film comprises polyester resin.

## Patentansprüche

1. Verfahren zur Bildung eines transparenten Aufzeichnungsmaterials durch Aufbringen einer klaren hydrophilen Schicht auf eine hydrophile Oberfläche eines im wesentlichen transparenten Substrats durch Beschichtung dieser Oberfläche mit einer wäßrigen Lösung aus Hydroxyethylcellulose-Polymer gefolgt durch Verdampfen des Wassers in dieser Lösung, **dadurch gekennzeichnet,** daß die Lösung eine Mischung aus Hydroxyethylcellulose-Polymer mit relativ niedrigem Molekulargewicht und Hydroxyethylcellulose-Polymer mit relativ hohem Molekulargewicht enthält, wobei das Polymer mit dem relativ niedrigen Molekulargewicht ein durchschnittliches Molekulargewicht von der Art hat, daß eine 5 Gew.-%ige wäßrige Vergleichslösung davon bei 25°C eine Viskosität im Bereich von 0,075 bis 0,15 Pa·s (75 bis 150 cps) aufweist, und das Polymer mit relativ hohem Molekulargewicht ein durchschnittliches Molekulargewicht von der Art hat, daß eine 2 Gew.-%ige Vergleichslösung davon bei 25°C eine Viskosität im Bereich von 4,8 bis 5,6 Pa·s (4800 bis 5600 cps) aufweist.

2. Verfahren nach Anspruch 1, **dadurch gekennzeichnet,** daß die Lösung weiterhin Dimethylolharnstoff enthält und die Beschichtung behandelt wird, um eine Vernetzung zwischen Hydroxyethylcellulose-Polymer und Dimethylolharnstoff zu bewirken.

3. Verfahren nach Anspruch 2, bei dem der Dimethylolharnstoff in einer Menge von 0,05 Gew.-% bis 0,4 Gew.-% bezogen auf das Gesamtgewicht des Hydroxyethylcellulose-Polymers vorhanden ist.

4. Verfahren nach einem der Ansprüche 1 bis 3, **dadurch gekennzeichnet,** daß die Konzentration des Polymers in der Beschichtungslösung im Bereich von 0,25 bis einschließlich 7 Gew.-% liegt und die Viskosität der Lösung gemessen bei 25°C 0,1 bis einschließlich 4,0 Pa·s (100 und 4000 cps) beträgt.

5. Verfahren nach Anspruch 4, **dadurch gekennzeichnet,** daß die Konzentration im Bereich von 2 bis einschließlich 6 Gew.-% und die Viskosität im Bereich von 0,2 bis einschließlich 2,0 Pa·s (200 bis 2000 cps) liegt.

6. Verfahren nach einem der Ansprüche 1 bis 5, bei dem die Lösung außerdem ein Hydroxyethylcellulose-Polymer mit einem Durchschnittsmolekulargewicht von der Art enthält, daß eine 2-%ige wäßrige Vergleichslösung davon eine Viskosität im Bereich von 0,25 bis 0,4 Pa·s (250 bis 400 cps) aufweist.

7. Verfahren nach einem der Ansprüche 1 bis 6, **dadurch gekennzeichnet,** daß die Konzentration in der Beschichtungslösung aus dem Polymer mit dem relativ niedrigen Molekulargewicht mindestens 0,25 Gew.-% beträgt, die Konzentration des Polymers mit dem relativ hohem Molekulargewicht nicht mehr als 1,5 Gew.-% ausmacht und daß die Konzentration des weiteren Polymers im Bereich von 0 bis einschließlich 1 Gew.-% liegt, vorausgesetzt jedoch, die Gesamtkonzentration der Polymere liegt im Bereich von 0,25 bis einschließlich 7 Gew.-%.

8. Verfahren nach Anspruch 7, **dadurch gekennzeichnet,** daß die Konzentration des Polymers mit dem relativ niedrigen Molekulargewicht im Bereich von 2 bis einschließlich 6 Gew.-% liegt.

9. Verfahren nach Anspruch 8, **dadurch gekennzeichnet,** daß die Konzentration des Polymers mit dem relativ niedrigen Molekulargewicht im Bereich von 3 bis einschließlich 4 Gew.-% liegt.

10. Verfahren nach Anspruch 7, 8 oder 9, **dadurch gekennzeichnet,** daß die Konzentration des Polymers mit dem relativ hohem Molekulargewicht 0,3 bis einschließlich 1,5 Gew.-% beträgt.

11. Verfahren nach einem der Ansprüche 1 bis 10, **dadurch gekennzeichnet,** daß die Beschichtungslösung weiterhin ein oberflächenaktives Mittel enthält, das die Haftung der Beschichtung an der Oberfläche verstärkt.

12. Verfahren nach Anspruch 11, **dadurch gekennzeichnet,** daß das oberflächenaktive Mittel eine Mischung aus anionischen und nicht ionischen oberflächenaktiven Mitteln ist und in der Beschichtungslösung in einer Konzentration im Bereich von 0,05 bis einschließlich 2 Gew.-% vorhanden ist.

13. Verfahren nach einem der Ansprüche 1 bis 12, **dadurch gekennzeichnet,** daß die Beschichtungslösung weiterhin hydratisierte Aluminiumoxidteilchen enthält, die der Beschichtung eine Stäbchenzahnung verleihen.

14. Verfahren nach Anspruch 13, **dadurch gekennzeichnet,** daß das Aluminiumoxid in der Beschichtungslösung in einer Konzentration von 0,75 bis einschließlich 2 Gew.-% vorhanden ist.

15. Verfahren nach einem der Ansprüche 1 bis 14, **dadurch gekennzeichnet,** daß die Beschichtungslösung weiterhin wachsbeschichtetes Siliciumoxid enthält.

16. Verfahren nach Anspruch 15, **dadurch gekennzeichnet,** daß das wachsbeschichtete Siliciumoxid in einer Konzentration von 0,1 bis einschließlich 0,3 Gew.-% vorhanden ist.

17. Verfahren nach einem der Ansprüche 1 bis 16, **dadurch gekennzeichnet,** daß das Substrat einen hydrophoben Harzfilm umfaßt, dessen Oberfläche behandelt wird, um sie hydrophil zu machen.

18. Verfahren nach Anspruch 17, **dadurch gekennzeichnet,** daß der Film ein Polyesterharz enthält.

19. Beschichtungslösung wie in einem der Ansprüche 1 bis 18 spezifiziert zur Verwendung in der Beschichtung einer hydrophilen Oberfläche eines im wesentlichen transparenten Substrats zur Herstellung eines transparenten Aufzeichnungsmaterials.

20. Transparentes Aufzeichnungsmaterial, das ein im wesentlichen transparentes Substrat mit einer hydrophilen, mit Hydroxyethycellulose-Polymer beschichteten Oberfläche umfaßt, **dadurch gekennzeichnet,** daß die Lösung eine Mischung aus Polymer mit relativ niedrigem Molekulargewicht und Polymer mit relativ hohem Molekulargewicht enthält, wobei das Polymer mit dem relativ niedrigen Molekulargewicht ein durchschnittliches Molekulargewicht von der Art hat, daß eine 5 Gew.-%ige wäßrige Vergleichslösung davon bei 25°C eine Viskosität im Bereich von 0,075 bis 0,15 Pa·s (75 bis 150 cps) aufweist, und das Polymer mit relativ hohem Molekulargewicht ein durchschnittliches Molekulargewicht von der Art hat, daß eine 2 Gew.-%ige Vergleichslösung davon bei 25°C eine Viskosität im Bereich von 4,8 bis 5,6 Pa·s (4800 bis 5600 cps) aufweist.

21. Transparentes Aufzeichnungsmaterial nach Anspruch 20, **dadurch gekennzeichnet,** daß das Hydroxyethylcellulose-Polymer in der Beschichtung mit Dimethylolharnstoff vernetzt ist.

22. Transparentes Aufzeichnungsmaterial nach Anspruch 21, in dem der Dimethylolharnstoff in einer Menge von 0,05 bis 0,4 Gew.-% bezogen auf das Gewicht des Hydroxyethylcellulose-Polymers vorhanden ist.

23. Transparentes Aufzeichnungsmaterial nach Anspruch 20, 21 oder 22, **dadurch gekennzeichnet,** daß die Mischung weiterhin ein Hydroxyethylcellulose-Polymer mit einem Molekulargewicht von der Art enthält, daß eine 2-Gew.-%ige wäßrige Vergleichslösung davon bei 25°C eine Viskosität im Bereich von 0,25 bis 0,4 Pa·s (250 bis 400 cps) aufweist.

24. Transparentes Aufzeichnungsmaterial nach einem der Ansprüche 20 bis 23, **dadurch gekennzeichnet,** daß die Beschichtung weiterhin ein oberflächenaktives Mittel enthält, das die Haftung der Beschichtung an der Oberfläche verstärkt.

25. Transparentes Aufzeichnungsmaterial nach Anspruch 24, **dadurch gekennzeichnet,** daß das oberflächenaktive Mittel eine Mischung aus anionischen und nicht ionischen oberflächenaktiven Mitteln ist.

26. Transparentes Aufzeichnungsmaterial nach einem der Ansprüche 20 bis 25, **dadurch gekennzeichnet,** daß die Beschichtung weiterhin hydratisierte Aluminiumoxidteilchen und/oder wachsbeschichtetes Siliciumoxid enthält.

27. Transparentes Aufzeichnungsmaterial nach einem der Ansprüche 20 bis 26, **dadurch gekennzeichnet,** daß das Substrat einen hydrophilen Harzfilm enthält, dessen Oberfläche behandelt wurde, um sie hydrophil zu machen.

28. Transparentes Aufzeichnungsmaterial nach Anspruch 27, **dadurch gekennzeichnet,** daß der Film Polyesterharz enthält.

## Revendications

1. Procédé de formation d'un support transparent d'informations par application d'un revêtement hydrophile clair sur une surface hydrophile d'un substrat pratiquement transparent par revêtement de cette surface avec une solution aqueuse de polymère d'hydroxyéthylcellulose, puis évaporation de l'eau de cette solution, caractérisé en ce que cette solution comprend un mélange de polymère d'hydroxyéthyl cellulose de poids moléculaire relativement bas et de polymère d'hydroxyéthyl cellulose de poids moléculaire relativement élevé, ce polymère de poids moléculaire relativement bas ayant un poids moléculaire moyen tel qu'une solution aqueuse de référence à 5% en poids de celui-ci a une viscosité dans la gamme de 0,075 à 0,15 Pa.s (75 à 150 cPs) à 25°C et ce polymère de poids moléculaire relativement élevé ayant un poids moléculaire moyen tel qu'une solution aqueuse de référence à 2% en poids de celui-ci a une viscosité dans la gamme de 4,8 à 5,6 Pa.s (4800 à 5600 cPs) à 25°C.

2. Procédé suivant la revendication 1, caractérisé en ce que la solution comprend de plus de la diméthylolurée et que le revêtement est traité de façon à effectuer une réticulation entre le polymère d'hydroxyéthyl cellulose et la diméthylolurée.

3. Procédé suivant la revendication 2, caractérisé en ce que la diméthylolurée est présente en une quantité de 0,05% en poids à 0,4% en poids par rapport au poids total de polymère d'hydroxyéthyl cellulose.

4. Procédé suivant l'une quelconque des revendications 1 à 3, caractérisé en ce que la concentration de ce polymère dans cette solution de revêtement est dans la gamme de 0,25 à 7% en poids inclus, et que la viscosité de cette solution est comprise entre 0,1 et 4,0 Pa.s (100 et 4000 cps) inclus, telle qu'elle est mesurée à 25°C.

5. Procédé suivant la revendication 4, caractérisé en ce que cette concentration est dans la gamme de 2 à 6% en poids inclus, et que cette viscosité est dans la gamme de 0,2 à 2,0 Pa.s (200 à 2000 cps) inclus.

6. Procédé suivant l'une quelconque des revendications 1 à 5, caractérisé en ce que cette solution comprend de plus un polymère d'hydroxyéthyl cellulose ayant un poids moléculaire moyen tel qu'une solution aqueuse de référence à 2% en poids de celui-ci a une viscosité dans la gamme de 0,25 à 0,4 Pa.s (250 à 400 cPs) à 25°C.

7. Procédé suivant l'une quelconque des revendications 1 à 6, caractérisé en ce que la concentration dans cette solution de revêtement de ce polymère de poids moléculaire relativement bas est d'au moins 0,25% en poids, la concentration de ce polymère de poids moléculaire relativement élevé ne dépasse pas 1,5% en poids et la concentration de cet autre polymère est dans la gamme de 0 à 1% en poids inclus, à condition cependant que la concentration totale de ces polymères se trouve dans la gamme de 0,2 à 7% en poids inclus.

8. Procédé suivant la revendication 7, caractérisé en ce que la concentration de ce polymère de poids moléculaire relativement bas est dans la gamme de 2 à 6% en poids inclus.

9. Procédé suivant la revendication 8, caractérisé en ce que la concentration de ce polymère de poids moléculaire relativement bas est dans la gamme de 3 à 4% en poids inclus.

10. Procédé suivant les revendications 7, 8 ou 9, caractérisé en ce que la concentration de ce polymère de poids moléculaire relativement élevé est de 0,3 à 1,5% en poids inclus.

11. Procédé suivant l'une quelconque des revendications 1 à 10, caractérisé en ce que cette solution de revêtement comprend de plus un agent tensioactif efficace pour favoriser l'adhérence de ce revêtement à cette surface.

12. Procédé suivant la revendication 11, caractérisé en ce que cet agent tensioactif est un mélange d'agents tensioactifs anionique et non ionique, et est présent dans cette solution de revêtement en une concentration dans la gamme de 0,05 à 2% en poids inclus.

13. Procédé suivant l'une quelconque des revendications 1 à 12, caractérisé en ce que cette solution de revêtement comprend de plus des particules d'alumine hydratées pour permettre à un crayon d'accrocher sur ce revêtement.

14. Procédé suivant la revendication 13, caractérisé en ce que cette alumine est présente dans cette solution de revêtement en une concentration dans la gamme de 0,75 à 2% en poids inclus.

15. Procédé suivant l'une quelconque des revendications 1 à 14, caractérisé en ce que cette solution de revêtement comprend de plus de la silice enduite de cire.

16. Procédé suivant la revendication 15, caractérisé en ce que cette silice enduite de cire est présente en une concentration dans la gamme de 0,1 à 0,3% en poids inclus.

17. Procédé suivant l'une quelconque des revendications 1 à 16, caractérisé en ce que ce substrat comprend une pellicule résineuse hydrophobe dont une surface a été traitée pour la rendre hydrophile.

18. Procédé suivant la revendication 17, caractérisé en ce que cette pellicule est une résine polyester.

19. Solution de revêtement suivant l'une quelconque des revendications 1 à 18 utilisable pour recouvrir une surface hydrophile d'un substrat pratiquement transparent afin de produire un support transparent d'informations.

20. Support transparent d'informations comprenant un substrat pratiquement transparent ayant une surface hydrophile revêtue de polymère d'hydroxyéthyl cellulose, caractérisé en ce que ce polymère comprend un mélange de polymère d'hydroxyéthyl cellulose de poids moléculaire relativement bas et de polymère d'hydroxyéthyl cellulose de poids moléculaire relativement élevé, ce polymère de poids moléculaire relativement bas ayant un poids moléculaire moyen tel qu'une solution aqueuse de référence à 5% en poids de celui-ci a une viscosité dans la gamme de 0,075 à 0,15 Pa.s (75 à 150 cPs) à 25°C et ce polymère de poids moléculaire relativement élevé ayant un poids moléculaire moyen tel qu'une solution aqueuse de référence à 2% en poids de celui-ci a une viscosité dans la gamme de 4,8 à 5,6 Pa.s (4800 à 5600 cPs) à 25°C.

21. Support transparent d'informations suivant la revendication 20, caractérisé en ce que le polymère d'hydroxyéthyl cellulose dans le revêtement est réticulé avec de la diméthylolurée.

22. Support transparent d'informations suivant la revendication 21, caractérisé en ce que la diméthylolurée est présente en une quantité de 0,05% en poids à 0,4% en poids par rapport au poids total de polymère d'hydroxyéthyl cellulose.

23. Support transparent d'informations suivant les revendications 20, 21 ou 22, caractérisé en ce que ce mélange comprend de plus un polymère d'hydroxyéthyl cellulose ayant un poids moléculaire moyen tel qu'une solution aqueuse de référence à 2% en poids de celui-ci a une viscosité dans la gamme de 0,25 à 0,4 Pa.s (250 à 400 cPs) à 25°C.

24. Support transparent d'informations suivant l'une quelconque des revendications 20 à 23, caractérisé en ce que ce revêtement comprend de plus un agent tensioactif efficace pour favoriser l'adhérence de ce revêtement à cette surface.

25. Support transparent d'informations suivant la revendication 24, caractérisé en ce que cet agent tensioactif est un mélange d'agents tensioactifs anionique et non ionique.

26. Support transparent d'informations suivant l'une quelconque des revendications 20 à 25, caractérisé en ce que le revêtement comprend de plus des particules d'alumine hydratées et/ou de la silice enduite de cire.

27. Support transparent d'informations suivant l'une quelconque des revendications 20 à 26, caractérisé en ce que le substrat comprend une pellicule résineuse hydrophobe dont une surface a été traitée pour la rendre hydrophile.

28. Procédé suivant la revendication 27, caractérisé en ce que cette pellicule est une résine polyester.
